# FASCICULE DE BREVET EUROPEEN

(11) **EP 2 082 938 B1**
(45) Date de publication et mention de la délivrance du brevet: **11.07.2012**
(21) Numéro de dépôt: 09151366.3
(22) Date de dépôt: 26.01.2009
(51) Int. Cl.: B60W 30/18, B60W 10/06, B60W 30/182, B60W 30/188

(54) **Procédé d'aide au décollage d'un véhicule automobile équipé d'une boîte de vitesses manuelle par régulation de régime et dispositif associé**
Unterstützungsvorrichtung und -verfahren für den Anfahrvorgang eines mit einer Handschaltung ausgerüsteten Fahrzeugs mittels Motordrehzahlregelung
Process and apparatus for assisting a vehicle equipped with a manual transmission to pull away using an engine speed governor

(30) Priorité: 28.01.2008 FR 0850500
(43) Date de publication de la demande: 29.07.2009
(73) Titulaire: Peugeot Citroën Automobiles Société Anonyme, 78140 Velizy Villacoublay (FR)
(72) Inventeur: Gourves, Frédéric, 95800, Cergy Le Haut (FR)
(74) Mandataire: Ménès, Catherine

(56) Documents cités:
- EP-A- 1 286 033
- EP-A- 1 354 751
- DE-A1- 19 536 038
- US-A1- 2002 042 327
- US-A1- 2002 107 626
- US-A1- 2002 132 701
- US-A1- 2005 051 131
- US-B1- 6 321 154

## Description

. L'invention concerne un procédé d'aide au décollage d'un véhicule automobile par régulation de régime. L'invention a notamment pour but d'améliorer l'agrément de conduite lors des décollages du véhicule. Par « décollage », on entend une situation de vie dans laquelle le véhicule entre en mouvement pour passer d'une vitesse nulle à une vitesse non nulle.

. L'invention trouve une application particulièrement avantageuse avec les véhicules équipés d'une boîte de vitesses manuelle reliée au moteur par l'intermédiaire d'un embrayage.

. On considère que pour un tel véhicule, la phase de décollage se produit lorsque, le rapport de première ou deuxième étant engagé, l'embrayage est en phase de glissement en vue de sa fermeture pour effectuer un accouplement entre l'arbre du moteur et l'arbre d'entrée de la boîte de vitesses, la pédale d'embrayage étant alors en phase de remontée et/ou lorsque la vitesse de ce véhicule est inférieure à une valeur seuil, par exemple 15km/h.

. Pour des raisons de consommation, la tendance actuelle est d'équiper de petits moteurs des véhicules lourds ce qui rend délicat les décollages de tels véhicules.

. En effet, lors d'un décollage, la volonté d'accélération du conducteur détectée par l'enfoncement de la pédale d'accélérateur est transformée en une consigne de couple via une calibration appelée cartographie de décollage qui fournit une valeur de couple en fonction d'un enfoncement de la pédale d'accélérateur. Cette cartographie de décollage est très raide, et fournit pour un faible enfoncement de pédale une forte consigne de couple afin d'éviter au moteur de caler.

. Ensuite, dès que le véhicule passe dans une phase hors décollage, l'enfoncement de la pédale est transformé en une consigne de couple par une deuxième cartographie, appelée cartographie hors décollage, qui est plus progressive que la cartographie de décollage.

. On considère que le véhicule se trouve dans une phase hors décollage lorsqu'il se trouve dans une situation de vie autre que celle du décollage, en particulier lorsqu'il se trouve déjà en mouvement et présente une vitesse supérieure à un seuil, par exemple 15km/h, et/ou que son embrayage est fermé.

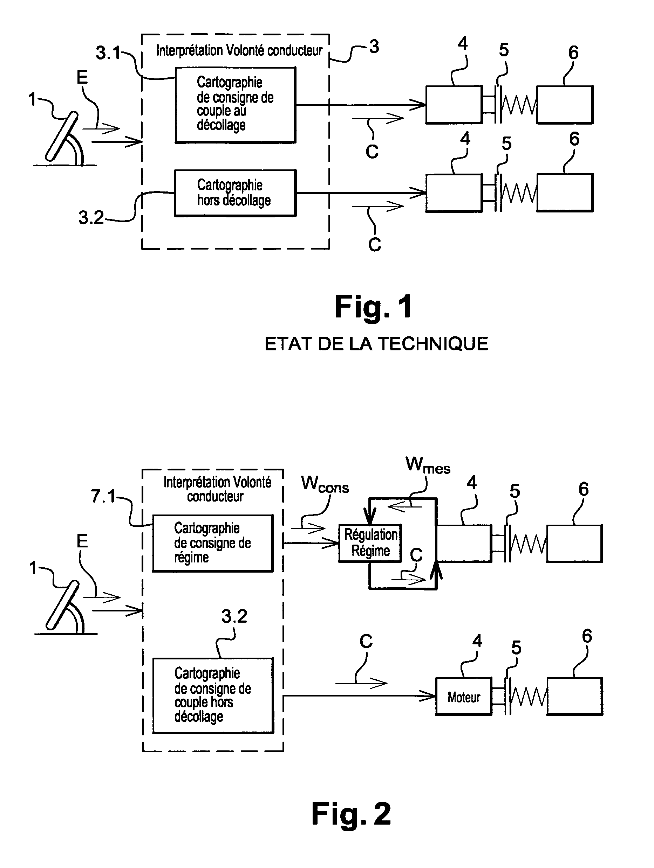

. La figure 1 montre ainsi le schéma de principe de la stratégie de commande selon l'état de la technique permettant de transformer l'enfoncement E de la pédale 2 en une consigne de couple transmise au moteur 4, ce moteur 4 étant relié à un ensemble 6 formé notamment par la boîte de vitesses et les roues du véhicule via un embrayage 5.

. Les stratégies de commande lorsque le véhicule est en phase de décollage et lorsque le véhicule est en phase hors décollage sont respectivement représentées dans la partie haute et basse de la figure.

. Plus précisément, dans la phase de décollage, lorsque la vitesse du véhicule est inférieure à une valeur seuil, par exemple 15km/h et/ou que l'embrayage 5 est en phase de glissement, le module 3.1 reçoit un signal correspondant à l'angle d'enfoncement E de la pédale 1 et fournit une consigne de couple au moteur 4 en fonction notamment de cet angle d'enfoncement E de la pédale 1. La cartographie du module 3.1 est telle que pour un enfoncement de la pédale faible un couple moteur suffisant pour faire décoller le véhicule et pour éviter au moteur de caler est généré.

. Dans la phase hors décollage, lorsque la vitesse du véhicule est supérieure à la valeur seuil et/ou que l'embrayage 5 est fermé de manière à assurer un accouplement entre l'arbre du moteur 4 et l'arbre d'entrée de la boîte de vitesses, le module 3.2 hors décollage, qui présente une cartographie plus progressive que la cartographie du module 3.1, reçoit un signal correspondant à l'angle d'enfoncement E de la pédale 1 et fournit une consigne de couple au moteur 4 en fonction notamment de cet angle d'enfoncement de la pédale 1, et/ou du rapport de vitesse engagé, et/ou du régime moteur.

. Pour un enfoncement de la pédale d'accélérateur 1 donné, le module 3.1 fournit donc une consigne de couple C beaucoup plus élevée que celle fournie par le module 3.2.

. Avec ce type de stratégie, les décollages du véhicule avec brio sont garantis par la cartographie de consigne de couple au décollage. Ainsi lorsque le véhicule se trouve à l'arrêt, au feu rouge par exemple, un faible enfoncement de la pédale va générer une consigne de couple moteur très importante ce qui va permettre un décollage dynamique.

. En revanche, cette stratégie rend les petits décollages de véhicule dans un bouchon par exemple ou lors de manoeuvres pour se garer très difficiles car le conducteur manque de progressivité lors de l'enfoncement de la pédale d'accélérateur.

. Le moteur a alors tendance à monter trop en régime car le conducteur a des difficultés à doser l'enfoncement de la pédale 1. En effet, lors de la mise en oeuvre de certaines stratégies connues, 1 à 3% d'enfoncement de la pédale d'accélérateur 1 peut engendrer un régime moteur compris entre 3000 et 3500 tours/min. Dans le cas extrême inverse, le moteur a tendance à caler car le conducteur a tendance à appuyer trop faiblement sur la pédale pour éviter un emballement du moteur.

. Il existe donc le besoin d'un procédé qui aide le conducteur à doser facilement le couple de consigne à transmettre au calculateur moteur lors d'une phase de décollage du véhicule pour éviter le calage ou l'emballement du moteur. Il est connu du document US2002/0132701, considéré comme l'état de l'art le plus proche, un procédé de commande de moteur de véhicule qui calcule une consigne de couple et détermine les paramètres de fonctionnement du moteur. La consigne pour un régime de ralenti du moteur est calculée à partir d'une puissance indiquée constante qui correspond à ou qui est légèrement supérieure aux pertes internes et externes quand le moteur est au ralenti.

. L'invention comble ce besoin en transformant dans un premier temps l'enfoncement de la pédale d'accélérateur en une consigne de régime (et non plus en une consigne de couple). Cette consigne de régime est ensuite transmise à un régulateur de régime qui génère alors une consigne de couple moteur, de manière que le moteur présente un régime sensiblement égal à ladite consigne de régime moteur.

. A cet effet, le régulateur de régime compare le régime réel du moteur à la consigne de régime fournie par la calibration et génère une consigne de couple permettant de compenser la différence entre ces deux régimes. Le régulateur de régime peut être du type PID, PI, ou autre...

. Le régulateur de régime génère ainsi le couple juste nécessaire pour maintenir la consigne de régime, ce qui permet de ne pas caler et de ne pas faire filer le régime moteur.

. Ainsi, le conducteur n'a plus besoin de faire varier la position de la pédale d'accélérateur lorsqu'il remonte progressivement la pédale d'embrayage lors d'un décollage.

. En effet, le conducteur a juste besoin d'appuyer légèrement sur la pédale au début du décollage (pour donner une consigne de régime faible) et ensuite rester à un enfoncement constant, le régulateur de régime générant alors la consigne de couple en fonction l'effort résistant pour que le moteur présente le régime de consigne demandé.

. Dans un exemple, 1 à 3% d'enfoncement de la pédale engendre un régime moteur compris entre 1000 et 1500 tours/min, soit un régime 2 à 3 fois moins important que celui observable avec les stratégies connues.

. Dès que l'embrayage est fermé, c'est-à-dire que l'arbre moteur est accouplé avec l'arbre d'entrée de la boîte de vitesses, et/ou que la vitesse du véhicule dépasse un certain seuil, la volonté conducteur est de préférence de nouveau transformée directement en une consigne de couple par la « cartographie hors décollage », comme auparavant.

. L'invention ne nécessite aucune modification du moteur ou de ses composants. Elle repose uniquement sur la modification du calculateur assurant la commande du moteur.

. L'invention concerne donc un procédé d'aide au décollage d'un véhicule comportant une pédale d'accélérateur ainsi qu'un moteur thermique relié à une boîte de vitesses manuelle, le moteur étant relié aux roues par l'intermédiaire d'un embrayage. Lorsque l'embrayage est en phase de glissement et/ou lorsque le véhicule présente une vitesse inférieure à une valeur seuil, en réponse à un appui sur la pédale d'accélérateur :
- on fournit une consigne de régime en fonction d'au moins un paramètre choisi parmi l'angle d'enfoncement de la pédale d'accélérateur et la vitesse de l'enfoncement de la pédale d'accélérateur,
- on transmet cette consigne de régime à un régulateur de régime, et
- on fournit, via ce régulateur de régime, une consigne de couple au moteur thermique de manière que le moteur présente un régime sensiblement égal à cette consigne de régime.

. Selon une mise en oeuvre, ladite consigne de régime est fournie par une consigne de cartographie.

. Selon une mise en oeuvre, la consigne de régime est la somme d'un régime de ralenti du véhicule et d'une valeur de régime intermédiaire issue d'une cartographie qui est fonction de l'enfoncement de la pédale d'accélérateur.

. Selon une mise en oeuvre, la valeur seuil vaut 15km/h.

. Selon une mise en oeuvre, pour fournir la consigne de couple, le régulateur de régime compare, dans une boucle de régulation, le régime de consigne avec le régime du moteur mesuré par le calculateur moteur et fournit une consigne de couple de sorte que la différence entre ces deux régimes soit la plus faible possible.

. Selon une mise en oeuvre, la boucle de régulation est de type PID (Proportionnel Intégral Dérivé).

. Selon une mise en oeuvre, lorsque la vitesse du véhicule est supérieure à la valeur seuil, on fournit directement, via une cartographie de consigne de couple, une consigne de couple au moteur en fonction d'un ou plusieurs paramètres d'entrée choisis parmi les suivants : l'angle d'enfoncement de la pédale d'accélérateur, la vitesse de l'enfoncement de la pédale d'accélérateur, et le rapport de vitesse enclenché.

. L'invention concerne en outre un dispositif d'aide au décollage d'un véhicule, destiné à être intégré à l'intérieur d'un véhicule comportant une pédale d'accélérateur pour commander l'accélération du véhicule ainsi qu'un moteur thermique relié à une boîte de vitesses manuelle caractérisé en ce qu'il comporte :
- un module de cartographie du régime moteur destiné à fournir une consigne de régime en fonction d'un ou plusieurs paramètres d'entrée choisis parmi les suivants : l'angle d'enfoncement de la pédale d'accélérateur, la vitesse de l'enfoncement de la pédale d'accélérateur, et le rapport de vitesse enclenché, et
- un régulateur de régime destiné à recevoir la consigne de régime fournie par le module de cartographie et à fournir une consigne de couple au moteur thermique, de manière que le moteur présente un régime sensiblement égal au régime de consigne.

. L'invention sera mieux comprise à la lecture de la description qui suit et à l'examen des figures qui l'accompagnent. Ces figures ne sont données qu'à titre illustratif mais nullement limitatif de l'invention. Elles montrent :

. Figure 1 (déjà décrite) : une représentation schématique de la stratégie de commande selon l'état de la technique permettant de transformer l'enfoncement de la pédale d'accélérateur en une consigne de couple moteur ;

. Figure 2 : une représentation schématique de la stratégie de commande selon l'invention permettant de transformer l'enfoncement de la pédale d'accélérateur en une consigne de couple moteur ;

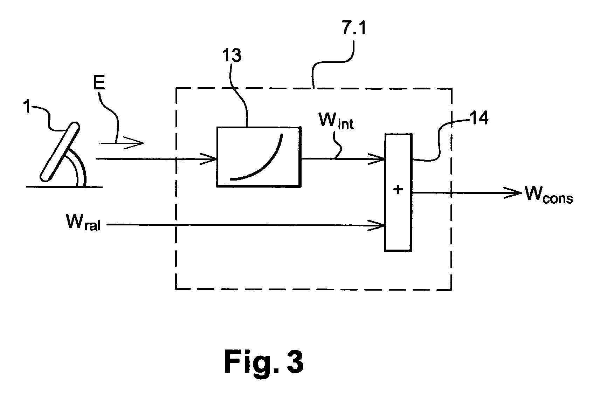

. Figure 3 : une représentation détaillée du module de cartographie selon l'invention transformant l'enfoncement de la pédale d'accélérateur en une consigne de régime moteur.

. Les éléments identiques conservent la même référence d'une figure à l'autre.

. La figure 2 montre un schéma de la stratégie de commande selon l'invention permettant de transformer l'enfoncement E de la pédale 1 d'accélérateur traduisant la volonté d'accélération du conducteur en une consigne de couple C transmise au moteur 4, ce moteur 4 étant relié à l'ensemble 6 formé par la boîte de vitesses et les roues via l'embrayage 5.

. Les stratégies de commande lorsque le véhicule est en phase de décollage et lorsque le véhicule est en phase hors décollage sont respectivement représentées dans la partie haute et basse de la figure.

. Plus précisément, dans la phase de décollage du véhicule, lorsque la vitesse du véhicule est inférieure à une valeur seuil valant par exemple 15km/h et/ou que l'embrayage 5 (représenté par ses deux disques écartés l'un de l'autre) est en phase de glissement, le module 7.1 fournit une consigne de régime Wcons en fonction d'un ou plusieurs des paramètres suivants : l'enfoncement E de la pédale 1, la vitesse d'enfoncement de la pédale 1 et le rapport de vitesse enclenché.

. Cette consigne de régime Wcons est transmise à un régulateur de régime 9 qui fournit une consigne de couple C au calculateur moteur permettant au moteur 4 d'atteindre le régime de consigne Wcons. A cet effet, le régulateur 9 prélève la mesure du régime moteur Wmes indiquée par le calculateur du moteur 4 et la compare avec la valeur du régime de consigne Wcons. Le régulateur 9 fournit ensuite le couple de consigne C qui permet de compenser la différence entre ces deux régimes Wcons et Wmes, autrement dit un couple de consigne C qui permet d'annuler la différence entre les deux régimes Wcons et Wmes.

. La boucle de régulation utilisée pour compenser la différence entre les régimes de consigne et réel Wcons et Wmes est de préférence de type PID (Proportionnel, Intégral et Dérivé) mais elle pourrait aussi être de type P, PI ou PD, ou autre.

. De préférence, la consigne de régime Wcons est la somme d'un régime de ralenti Wral et d'une valeur Wint d'offset de régime issue d'une cartographie 13 qui dépend de l'enfoncement E de la pédale d'accélérateur 1. L'allure de la cartographie est linéaire ou parabolique.

. Ainsi, comme montré sur la figure 3, une cartographie 13, linéaire ou parabolique, fournit une valeur Wint d'offset de régime en fonction de l'enfoncement E de la pédale. La valeur Wint est ajoutée à la consigne Wral de régime de ralenti au moyen d'un module d'addition 14 afin d'obtenir la consigne de régime Wcons qui sera appliquée en entrée du régulateur 9.

. Dans la phase hors décollage, lorsque la vitesse du véhicule est supérieure à la valeur seuil et/ou que l'embrayage 5 représenté en noir est fermé (ses deux disques étant alors collés l'un contre l'autre) de sorte que l'arbre du moteur 4 est accouplé avec l'arbre d'entrée de la boîte de vitesses, le module 3.2 identique au module 3.2 de la figure 1 reçoit un signal correspondant à l'enfoncement E de la pédale 1 et fournit directement une consigne de couple C en fonction d'un ou plusieurs des paramètres suivants : l'enfoncement de la pédale, la vitesse d'enfoncement de la pédale et le rapport de vitesse enclenché. Cette consigne de couple C est transmise au calculateur du moteur 4.

## Revendications

1. Procédé d'aide au décollage d'un véhicule comportant une pédale d'accélérateur (1) ainsi qu'un moteur thermique (4) relié à une boîte de vitesses manuelle, le moteur (4) étant relié aux roues par l'intermédiaire d'un embrayage (5), **caractérisé en ce que**, lorsque l'embrayage (5) est en phase de glissement et/ou lorsque le véhicule présente une vitesse inférieure à une valeur seuil, en réponse à un appui sur la pédale d'accélérateur (1),
- on fournit une consigne de régime (Wcons) en fonction d'au moins un paramètre choisi parmi l'angle d'enfoncement de la pédale d'accélérateur (1) et la vitesse de l'enfoncement de la pédale d'accélérateur (1),
- on transmet cette consigne de régime (Wcons) à un régulateur de régime (9), et
- on fournit, via ce régulateur de régime (9), une consigne de couple (C) au moteur thermique (4) de manière que le moteur (4) présente un régime (Wmes) sensiblement égal à cette consigne de régime (Wcons).

2. Procédé selon la revendication 1, **caractérisé en ce que** ladite consigne de régime (Wcons) est fournie par une consigne de cartographie.

3. Procédé selon la revendication 1 ou 2, **caractérisé en ce que** la consigne de régime (Wcons) est la somme d'un régime de ralenti (Wr) du véhicule et d'une valeur de régime intermédiaire (Wint) issue d'une cartographie (13) qui est fonction de l'enfoncement de la pédale d'accélérateur (E).

4. Procédé selon l'une des revendications précédentes, **caractérisé en ce que** la valeur seuil vaut 15km/h.

5. Procédé selon l'une des revendications précédentes, **caractérisé en ce que**, pour fournir la consigne de couple (C), le régulateur de régime (9) compare, dans une boucle de régulation, le régime de consigne (Wcons) avec le régime (Wmes) du moteur (4) mesuré par le calculateur moteur et fournit une consigne de couple (C) de sorte que la différence entre ces deux régimes (Wcons, Wmes) soit la plus faible possible.

6. Procédé selon la revendication 5, **caractérisé en ce que** la boucle de régulation est de type PID (Proportionnel Intégral Dérivé).

7. Procédé selon l'une des revendications précédentes, **caractérisé en ce que** lorsque la vitesse du véhicule est supérieure à la valeur seuil, on fournit directement, via une cartographie (3.2) de consigne de couple, une consigne de couple au moteur (4) en fonction d'un ou plusieurs paramètres d'entrée choisis parmi les suivants : l'angle d'enfoncement de la pédale d'accélérateur (1), la vitesse de l'enfoncement de la pédale d'accélérateur (1), et le rapport de vitesse enclenché.

8. Procédé selon l'une des revendications précédentes, **caractérisé en ce que** la consigne de régime (Wcons) est également fonction du rapport de vitesse enclenché.

## Claims

1. A process for assisting the pulling away of a vehicle comprising an accelerator pedal (1) and a heat engine (4) connected to a manual gearbox, the engine (4) being connected to the wheels by means of a clutch (5), **characterized in that** when the clutch (5) is in the slipping phase and/or when the vehicle has a speed lower than a threshold value, in response to a depression of the accelerator pedal (1),
- a speed setpoint (Wcons) is provided as a function of at least one parameter selected from the depression angle of the accelerator pedal (1) and the speed of depression of the accelerator pedal (1),
- this speed setpoint (Wcons) is transmitted to a speed regulator (9), and
- via this speed regulator (9) a torque setpoint (C) is provided to the heat engine (4) such that the engine (4) has a speed (Wmes) which is substantially equal to this speed setpoint (Wcons).

2. The process according to Claim 1, **characterized in that** the said speed setpoint (Wcons) is provided by a cartography setpoint.

3. The process according to Claim 1 or 2, **characterized in that** the speed setpoint (Wcons) is the sum of an idling speed (Wr) of the vehicle and of an intermediate speed value (Wint) issued from a cartography (13) which is a function of the depression of the accelerator pedal (E).

4. The process according to one of the preceding claims, **characterized in that** the threshold value is equal to 15 km/h.

5. The process according to one of the preceding claims, **characterized in that** to provide the torque setpoint (C), the speed regulator (9) compares, in a regulation loop, the setpoint speed (Wcons) with the speed (Wmes) of the engine (4) measured by the engine control unit and provides a torque setpoint (C) such that the difference between these two speeds (Wcons, Wmes) is as small as possible.

6. The process according to Claim 5, **characterized in that** the regulation loop is of the PID type (proportional integral derivative).

7. The process according to one of the preceding claims, **characterized in that** when the speed of the vehicle is greater than the threshold value, a torque setpoint is provided directly to the engine (4) via a torque setpoint cartography (3,2) as a function of one or more input parameters selected from the following: the angle of depression of the accelerator pedal (1), the speed of depression of the accelerator pedal (1) and the engaged gear ratio.

8. The process according to one of the preceding claims, **characterized in that** the speed setpoint (Wcons) is also a function of the engaged speed ratio.

## Patentansprüche

1. Unterstützungsverfahren für den Anfahrvorgang eines Fahrzeugs, das ein Gaspedal (1) sowie einen Verbrennungsmotor (4) aufweist, der mit einem manuellen Schaltgetriebe verbunden ist, wobei der Motor (4) mit den Rädern über eine Kupplung (5) verbunden ist, **dadurch gekennzeichnet, dass**, wenn die Kupplung (5) in der Schlupfphase ist und/oder wenn das Fahrzeug eine Geschwindigkeit unter einem Schwellenwert aufweist, als Reaktion auf einen Druck auf das Gaspedal (1)
- ein Drehzahlsollwert (Wcons) in Abhängigkeit von mindestens einem Parameter geliefert wird, der aus dem Eindrückwinkel des Gaspedals (1) und der Eindrückgeschwindigkeit des Gaspedals (1) ausgewählt wird,
- dieser Drehzahlsollwert (Wcons) an einen Drehzahlregler (9) übertragen wird, und
- über diesen Drehzahlregler (9) ein Momentsollwert (C) an den Verbrennungsmotor (4) geliefert wird, so dass der Motor (4) eine Drehzahl (Wmes) aufweist, die im Wesentlichen gleich diesem Drehzahlsollwert (Wcons) ist.

2. Verfahren nach Anspruch 1, **dadurch gekennzeichnet, dass** der Drehzahlsollwert (Wcons) von einem Kartographie-Sollwert geliefert wird.

3. Verfahren nach Anspruch 1 oder 2, **dadurch gekennzeichnet, dass** der Drehzahlsollwert (Wcons) die Summe aus einer Leerlaufdrehzahl (Wr) des Fahrzeugs und aus einem Zwischendrehzahlwert (Wint) ist, der aus einer Kartographie (13) stammt, die von dem Eindrücken des Gaspedals (E) abhängt.

4. Verfahren nach einem der vorhergehenden Ansprüche, **dadurch gekennzeichnet, dass** der Schwellenwert gleich 15 km/h ist.

5. Verfahren nach einem der vorhergehenden Ansprüche, **dadurch gekennzeichnet, dass** der Drehzahlregler (9) zum Liefern des Momentsollwerts (C) in einer Regelschleife die Solldrehzahl (Wcons) mit der Drehzahl (Wmes) des Motors (4) vergleicht, die von dem Motor-Rechner gemessen wird, und einen Momentsollwert (C) derart liefert, dass der Unterschied zwischen diesen zwei Drehzahlen (Wcons, Wmes) möglichst gering ist.

6. Verfahren nach Anspruch 5, **dadurch gekennzeichnet, dass** die Regelschleife des Typs PID (Proportional Integral Differential) ist.

7. Verfahren nach einem der vorhergehenden Ansprüche, **dadurch gekennzeichnet, dass** man, wenn die Geschwindigkeit des Fahrzeugs größer ist als der Schwellenwert, über eine Momentsollwert- Kartographie (3.2) dem Motor (4) einen Momentsollwert in Abhängigkeit von einem oder mehreren Eingangsparametern liefert, die aus den folgenden ausgewählt werden: der Eindrückwinkel des Gaspedals (1), die Eindrückgeschwindigkeit des Gaspedals (1) und der eingerückte Gang.

8. Verfahren nach einem der vorhergehenden Ansprüche, **dadurch gekennzeichnet, dass** der Drehzahlsollwert (Wcons) auch von dem eingerückten Gang abhängt.
